Europäisches Patentamt

European Patent Office

Office européen des brevets

(19)

(11) Veröffentlichungsnummer: **0 136 716**
**B1**

(12) **EUROPÄISCHE PATENTSCHRIFT**

(45) Veröffentlichungstag der Patentschrift: **25.07.90**

(51) Int. Cl.⁵: **B 23 Q 5/027**

(21) Anmeldenummer: **84111861.5**

(22) Anmeldetag: **04.10.84**

(54) **Bearbeitungsmaschine zur Oberflächenbehandlung.**

(30) Priorität: **06.10.83 DE 3336381**

(43) Veröffentlichungstag der Anmeldung:
**10.04.85 Patentblatt 85/15**

(45) Bekanntmachung des Hinweises auf die
Patenterteilung:
**25.07.90 Patentblatt 90/30**

(84) Benannte Vertragsstaaten:
**AT BE CH FR GB IT LI LU NL SE**

(56) Entgegenhaltungen:
**US-A-2 561 344**
**US-A-2 690 081**
**US-A-3 007 230**
**US-A-4 233 850**

(73) Patentinhaber: **Öszüt, Mümin**
**Mörikestrasse 28**
**D-7128 Lauffen (DE)**

(72) Erfinder: **Öszüt, Mümin**
**Mörikestrasse 28**
**D-7128 Lauffen (DE)**

(74) Vertreter: **Vogel, Georg**
**Pat.-Ing. Georg Vogel Hermann-Essig-Strasse 35**
**D-7141 Schwieberdingen (DE)**

EP 0 136 716 B1

## Beschreibung

Die Erfindung betrifft eine Bearbeitungsmaschine zur Oberflächenbehandlung von Werkstücken mittels einer linear hin- und herbewegbaren, mit einem Bearbeitungswerkzeug verbundenen Stoßstange, die durch einen mittels eines Antriebs antreibbaren Exzenterantrieb in Bewegung versetzt wird und bei der mittels einer entgegengesetzt linear hin- und herbewegbaren Ausgleichsmasse eines Exzentermassenausgleiches die Unwucht des Exzenterantriebes ausgeglichen wird, wobei der Exzenter des Exzenterantriebes und der Exzenter des Exzentermassenausgleiches gleich groß und um 180° verdreht drehfest auf einer Antriebswelle angeordnet sind.

Eine als Säge ausgebildete Bearbeitungsmaschine dieser Art ist durch die US—A—16 48 008 bekannt. Dabei sind die beiden Exzenter mit ihren Exzenterbüchsen einmal direkt mit dem Sägeblatt und zum anderen mit einem Ausgleichselement gekoppelt. Die Möglichkeit der Veränderung des Hubes des Sägeblattes ist nicht gegeben. Außerdem ist die Ausladung des Exzentermassenausgleiches bezogen auf die Antriebsachse gerade in die andere Richtung wie das Bearbeitungswerkzeug, so daß diese Art Antrieb nicht für ein Handgerät zur Oberflächenbearbeitung geeignet ist.

Aus der DE—C—25 34 626 ist eine Vorrichtung für den Massenausgleich bie mittels Kurbeltrieb angetriebenen Maschinen bekannt. Diese bekannte Vorrichtung sieht zwei ineinander gelagerte Exzenter vor, die ein kompliziertes und aufwendiges Hebelgestänge mit Ausgleichsgewicht steuern, das für ein handliches Gerät zur Oberflächenbehandlung nicht geeignet ist.

Es ist Aufgabe der Erfindung, eine Bearbeitungsmaschine zur Oberflächenbehandlung der eingangs erwähnten Art zu schaffen, bei der der Exzenterantrieb und der Exzentermassenausgleich in einem kleinen kompakten Gehäuse untergebracht werden können und der Exzenterhub für die Stoßstange dennoch leicht verändert werden kann, wobei automatisch der Exzentermassenausgleich an den veränderten Exzenterhub angepaßt wird.

Diese Aufgabe wird nach der Erfindung dadurch gelöst, daß der Exzenter des Exzenterantriebes mit einer Exzenterbüchse und der Exzenter des Exzentermassenausgleiches mit einer Gegenexzenterbüchse versehen sind, daß die Exzenterbüchse und die Gegenexzenterbüchse drehfest untereinander verbunden und gemeinsam gegenüber den Exzentern verstellbar sind, daß auf der Gegenexzenterbüchse ein Ausgleichsgewicht drehbar gelagert ist, das in einer Längsführung parallel zur Stoßstange bewegbar geführt ist, und daß eine Einstelleinrichtung zur Veränderung des Exzenterhubes aus einer mit der Antriebswelle drehfest verbundenen Handhabe und einem drehfest mit der Exzenterbüchse und der Gegenexzenterbüchse verbundenen Lagerstück besteht, wobei die Handhabe und das Lagerstück mittels einer Stellschraube drehfest untereinander verbindbar sind.

Alle Teile des Exzenterantriebes und des Exzentermassenausgleiches liegen um die Antriebswelle, so daß ein kleines und kompaktes Gehäuse verwendet werden kann. Die so geschaffene Handbearbeitungsmaschine kann leicht gefaßt und ohne Ermüdung länger gehalten werden. Mit der Verstellung der Handhabe wird neben dem Exzenterhub auch gleichzeitig der Exzentermassenausgleich entsprechend verändert, so daß unabhängig von dem eingestellten Exzenterhub und damit Hub der Stoßstange stets ein Ausgleich der Unwucht gegeben ist.

Weitere Merkmale der Erfindung sind den Unteransprüchen zu entnehmen.

Ein Ausführungsbeispiel der Erfindung ist in der Zeichnung dargestellt und wird im folgenden näher beschrieben Es zeigt:

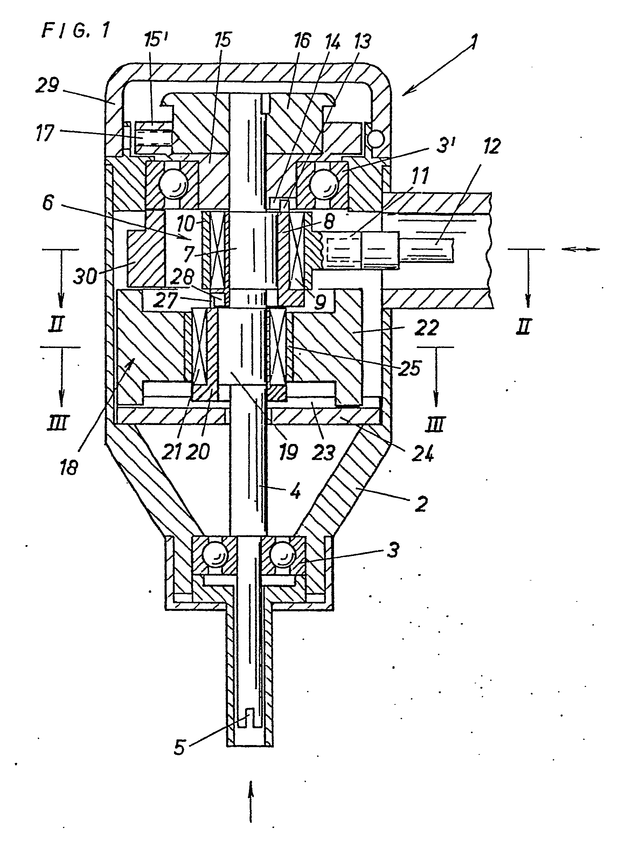

Fig. 1 eine Schnittansicht durch den Antriebskopf der Bearbeitungsmaschine,

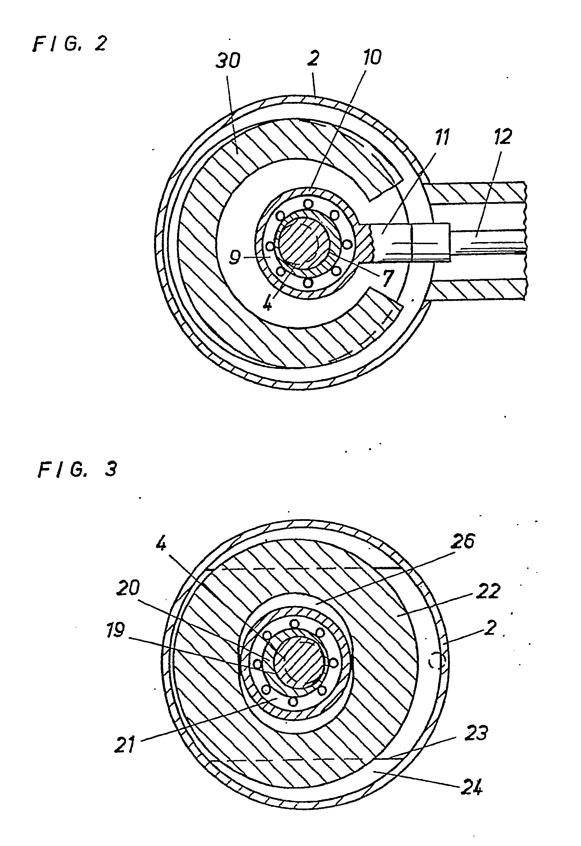

Fig. 2 die Schnittansicht gem. Linie II—II in Fig. 1, und

Fig. 3 die Schnittansicht gem. Linie III—III nach Fig. 1.

Die Bearbeitungsmaschine zum Bearbeiten von Oberflächen an Werkstücken besteht im wesentlichen aus einem Antriebskopf 1, der auch gleichzeitig als Handhabe dient. Der Antriebskopf 1 weist ein etwa zylindrisches Gehäuse 2 auf, in dem koaxial eine in den beiden Endbereichen in Lagern 3, 3' drehbar gelagerte Antriebswelle 4 vorgesehen ist. Am unteren, von außen zugänglichen Ende ist an der Antriebswelle 4 ein Anschlußstück für den Anschluß eines Motors bzw. einer von diesem Motor angetriebenen biegsamen Welle vorgesehen. Zwischen den beiden Lagern 3, 3', und zwar dicht an dem dem Anschlußstück 5 gegenüberliegenden Lager 3' ist auf der Antriebswelle 4 ein Exzenterantrieb 6 angeordnet. Dieser besthet aus einem auf der Antriebswelle 4 angedrehten Exzenter 7, auf dem eine Exzenterbüches 8 drehbar gelagert ist. Auf der Exzenterbüchse 8 ist ein Nadellager 9 oder dgl. aufgeschoben, das wiederum von einem Lagerring 10 umschlossen wird. An letzterem ist ein senkrecht zur Antriebswelle 4 abstehendes Anschlußauge 11 angeordnet, in das eine Stoßstange 12 eingeschraubt ist. Die Stoßstange 12 ist in nicht dargestellter Weise mit dem Werkzeug zur Oberflächenbearbeitung verbunden, welches eine hin- und hergehende Bewegung ausführt.

Ein nach oben zeigender Fortsatz 13 der Exzenterbüchse 8 ragt in ein radiales Langloch 14 eines Lagerstückes 15, in dem die Antriebswelle 4 gelagert ist und das seinerseits im Lager 3' sitzt. Das Lagerstück 15 ist am nach außen gerichteten Ende ringförmig ausgedreht. In dieser Ausdrehung ist eine scheibenförmig Handhabe 16 drehbar eingesetzt, die mit der Antriebswelle 4 drehfest verbunden ist. In den überstehenden Ring 15' des Lagerstückes 15 ist eine Stellschraube 17 eingesetzt, die gegen die Handhabe 16 geschraubt werden kann, um diese mit dem Lagerstück 15 drehfest zu verbinden. Zweckmäßigerweise können am Umfang der Handhabe 16 Vertiefungen zur formschlüssigen Aufnahme der Schraubenspitze vorgesehen sein. Weiterhin ist eine Skala angebracht, um die jeweilige Einstellung ablesen bzw. wiederholbar einstellen zu können. Es ist ersichtlich, daß durch Drehen der Handhabe 16 gegenüber dem Lagerstück 15 auch die Exzenterbüchse 8 auf dem Exzenter 7 verdreht wird, so daß der Exzenterhub verändert wird. Dargestellt ist die Einstellung mit dem größten Exzenterhub. Bei Verstellung um 180° ist der kleinste Exzenterhub eingestellt. Bei gleich großer Exzentrizität von Exzenter 8 und Exzenterbüchse 8 gleichen sich die beiden Exzentrizitäten in der Minimalstellung aus, so daß die Stoßstange 12 stillsteht. Die Handhabe 16 ist durch eine abnehmbare Haube 29 abgedeckt.

Unterhalb des Exzenterantriebes 6 ist ein Exzentermassenausgleich 18 vorgesehen, der der Unwucht des Exzenterantriebes 6 entgegenwirkt. Zu diesem Zweck ist ein dem Exzenter 7 entsprechender Gegenexzenter 19 vorgesehen, der um 180° versetzt auf die Antriebswelle 4 angedreht worden ist. Auf dem Gegenexzenter 19 sitzt eine der Exzenterbüchse 8 entsprechende Gegenexzenterbüchse 20. Dargestellt ist ebenfalls die Einstellung mit dem größten Exzenterhub. Auf der Gegenexzenterbüchse 20 ist ein Lager 21, vorzugsweise ein Nadellager, vorgesehen, auf dem ein Ausgleichsgewicht 22 gelagert ist. Dieses sitzt mit einer Ausnehmung in einer Längsführung 23 einer im Gehäuse 2 ruhenden Lagerplatte 24. Die Längsführung 23 ist parallel zur Stoßstange 12 ausgerichtet. Zur Kraftübertragung ist das Lager 21 von einer Büchse 25 umgeben, die in einer Langlochführung 26 des Ausgleichsgewichtes 22 angeordnet ist. Die lang Achse der Langlochführung 26 ist senkrecht zur Längsführung 23 gerichtet, so daß das Ausgleichsgewicht 22 während der Drehung des Exzenters 19 eine Längsbewegung in der Längsführung 23 ausführt, die der Exzenterbewegung des Exzenters 7 bzw. der Stoßstange 12 entgegengesetzt ist. Auch die Gegenexzenterbüche 20 ragt mit einem Fortsatz 27 in ein radiales Langloch 28 in einem angedrehten Ring der Exzenterbüche 8 hinein. Letztere ist somit drehfest mit der Gegenexzenterbüchse 20 verbunden. Zwischen dem Lager 3' und dem Ausgleichsgewicht 22 ist ein Abstandshalter 30 in Form eines offenen Ringes lose eingelegt.

Es ist ersichtlich, daß durch Verdrehen der Handhabe 16 sowohl die Exzenterbüchse 8, als auch die Gegenexzenterbüchse 20 auf ihrem Exzenter 7 bzw. Gegenexzenter 19 verdreht werden, so daß in Abhängigkeit des Exzenterhubes ein automatischer Ausgleich der Unwuchtmassen erfolgt. Andererseits wird durch Verbinden von Lagerstück 15 und Handhabe 16 die Exzenterbüchse 8 mit dem Exzenter 7 und die Gegenexzenterbüchse 20 mit dem Gegenexzenter 19 drehfest verbunden, so daß auch während der Drehung der Antriebswelle 4 die gewählte Einstellung beibehalten bleibt.

In weiterer Ausgestaltung kann das Ausgleichsgewicht 22 auch zweigeteilt und die beiden gleichen Teil beiderseits des Exzenterantriebes 6 auf der Antriebswelle 4 angeordnet sein. Zu diesem Zweck sind entsprechende Gegenexzenter auf der Antriebswelle 4 und auf diesen gelagerte Gegenexzenterbüchsen vorgesehen, wobei letztere vorzugsweise in beschriebener Weise miteinander gekoppelt sind, so daß sie gemeinsam miteinander verstellt werden können. Durch die so erreichte gleichmäßige Verteilung der Ausgleichsmassenkräfte wird die Laufruhe der Bearbeitungsmaschine noch erhöht. Da die mit der Stoßstange 12 zu verbindenden Bearbeitungswerkzeuge nicht immer das gleich Gewicht aufweisen, ist bei konstantem Ausgleichsgewicht 22 der Massenausgleich nicht immer einzuhalten. Um einen möglichst genauen Massenausgleich zu erhalten, kann das Ausgleichsgewicht 22 bzw. die Ausgleichsgewichte mit Bohrungen oder dgl. versehen sein, in die von außen, z.B. durch entsprechend im Gehäuse 2 angeordnete Öffnungen Zusatzgewichte eingesetzt, z.B. eingeschraubt werden können. Das Ausgleichsgewicht kann so ohne Demontage der Bearbeitungsmaschine gewichtsmäßig verändert und dem Gewicht der auszugleichenden Teile angepaßt werden. Die Zusatzgewichte können bei Nichtgebrauch in Bohrungen oder dgl. eines Handgriffes oder eines Teiles des Gehäuses 2 untergebracht sein, so daß sie immer griffbereit sind und kein Losteil darstellen.

**Patentansprüche**

1. Bearbeitungsmaschine zur Oberflächenbehandlung von Werkstücken mittels einer linear hin- und herbewegbaren, mit einem Bearbeitungswerkzeug verbundenen Stoßstange (12), die durch einen mittels eines Antriebs (5) angtreibbaren Exzenterantrieb (6) in Bewegung versetzt wird und bei der mittels einer entgegengesetzt linear hin- und herbewegbaren Ausgleichsmasse (22) eines Exzentermassenausgleiches (18) die Unwucht des Exzenterantriebes ausgeglichen wird, wobei der Exzenter (7) des Exzenterantriebes und der Exzenter (19) des Exzentermassenausgleiches gleich groß und um 180° verdreht drehfest auf einer Antriebswelle (4) angeordnet sind, dadurch gekennzeichnet,

daß der Exzenter (7) des Exzenterantriebes (6) mit einer Exzenterbüchse (8) und der Exzenter (19) des Exzentermassenausgleiches (18) mit einer Gegenexzenterbüchse (20) versehen sind,

daß die Exzenterbüchse (8) und die Gegenexzenterbüchse (20) drehfest untereinander verbunden und gemeinsam gegenüber den Exzentern (7, 19) verstellbar sind,

daß auf der Gegenexzenterbüchse (20) ein Ausgleichsgewicht (22) drehbar gelagert ist, das in einer Längsführung (23) parallel zur Stoßstange (12) bewegbar geführt ist, und

daß eine Einstelleinrichtung zur Veränderung des Exzenterhubes aus einer mit der Antriebswelle (4) drehfest verbundenen Handhabe (16) und einem drehfest mit der Exzenterbüchse (8) und der Gegenexzenterbüchse (20) verbundenen Lagerstück (15) besteht, wobei die Handhabe (16) und das Lagerstück (15) mittels einer Stellschraube (17) drehfest untereinander verbindbar sind.

2. Bearbeitungsmaschine nach Anspruch 1, dadurch gekennzeichnet,

daß die Exzenterbüchse (8) des Exzenterantriebes (6) und die Gegenexzenterbüchse (20) des Exzentermassenausgleiches (18) je einen Fortsatz (13, 27) aufweisen, der jeweils axial in ein radiales Langloch (14, 28) der vorgeschalteten Lagerstücks (15) bgl. der Exzenterbüchse (8) formschlüssig eingreift.

3. Bearbeitungsmaschine nach Anspruch 1 oder 2, dadurch gekennzeichnet,

daß die Einstelleinrichtung aus Handhabe (16) und Lagerstück (15) an dem einem Anschlußstück (5) des Antriebs gegenüberliegenden Ende der Antriebswelle (4) angeordnet ist.

4. Bearbeitungsmaschine nach einem der Ansprüche 1 bis 3, dadurch gekennzeichnet,

daß die Längsführung (23) auf einer Platte (24) parallel zur Stoßstange (12) zwischen den die Antriebswelle (4) tragenden Lagern (3, 3') angeordnet ist.

5. Bearbeitungsmaschine nach einem der Ansprüche 1 bis 4, dadurch gekennzeichnet,

daß der Exzentermassenausgleich (18) geteilt und zu gleichen Teilen beiderseits des Exzenterantriebes (6) auf Gegenexzentern und vorzugsweise miteinander gekoppelten Gegenexzenterbüchsen angeordnet ist.

6. Bearbeitungsmaschine nach einem der Ansprüche 1 bis 5, dadurch gekennzeichnet,

daß das Ausgleichsgewicht (18) mit Bohrungen oder dgl. versehen ist, in die von außen Zusatzgewichte einsetzbar sind.

7. Bearbeitungsmaschine nach einem der Ansprüche 1 bis 6, dadurch gekennzeichnet,

daß die Zusatzgewichte bei Nichtgebrauch in Bohrungen oder dgl. eines Handgriffes oder Teiles des Gehäuses (2) gelagert sind.

**Revendications**

1. Machine d'usinage pour le traitement des surfaces de pièces au moyen d'une tige (12) de poussée pouvant être animée d'un mouvement linéaire de va-et-vient reliée à un outil de travail, qui est mise en mouvement au moyen d'un entraînement (6) par excentrique, sur laquelle le balourd de l'entraînement par excentrique est compensé par une masse (18) d'équilibrage, à excentrique pouvant être soumise à un mouvement de va-et-vient linéaire et sur laquelle l'excentrique (7) de l'entraînement par excentrique et l'excentrique (19) de la masse d'équilibrage sont d'égale grandeur et sont disposés calés ou bloqués en rotation sur un arbre (4) d'entraînement, avec un angle de décalage de 180°, machine caractérisée en ce que l'excentrique (7) de l'entraînement (6) est pourvu d'un manchon (8) d'excentrique, et l'excentrique (19) de la masse (18) d'équilibrage est pourvu d'un manchon (20) d'excentrique opposé; en ce que le manchon (8) d'excentrique et le manchon (20) d'excentrique opposé sont reliés entre eux en étant bloqués en rotation, et peuvent être déplacés ensemble par rapport aux excentriques (7, 19),

en ce qu'un poids (22) d'équilibrage, qui est monté libre en rotation sur le manchon (20) d'excentrique opposé, est mobile dans un guidage longitudinal (23) parallèlement à la tige (12) de poussée, et en ce qu'un dispositif de réglage, prévu pour la modification de la course d'excentrique, est constitué par une poignée (16) reliée en étant bloquée en rotation avec l'arbre (4) d'entraînement, et par un élément de palier (15) relié en étant bloqué en rotation avec le manchon (8) d'excentrique et le manchon (20) d'excentrique opposé, la poignée (16) et l'élément de palier (15) pouvant être reliés, bloqués en rotation entre eux, au moyen d'une vis (17) de réglage.

2. Machine d'usinage selon la revendication 1, caractérisée en ce que la manchon (8) de l'entraînement d'excentrique (6) et le manchon (20) d'excentrique opposé de la masse (18) d'équilibrage présentent chacun un appendice (13, 27), qui est inséré axialement, par encastrement de forme, dans un trou oblong (14, 28) radial de l'élément de palier (15) ou du manchon (8) d'excentrique monté en amont.

3. Machine d'usinage selon la revendication 1 ou 2, caractérisée en ce que le dispositif de réglage constitué par une poignée (16) et par l'élément de palier (15) est disposé sur l'extrémité de l'arbre (4) d'entraînement opposée à un élément (5) de raccordement de l'entraînement.

4. Machine d'usinage selon l'une des revendications 1 à 3, caractérisée en ce que le guidage longitudinal (23) est disposé sur une plaque (24) parallèlement à la tige (12) de poussée entre les paliers (3, 3') qui supportent l'arbre (4) d'entraînement.

5. Machine d'usinage selon l'une des revendications 1 à 4, caractérisée en ce que la masse (18) d'équilibrage est divisée et disposée par parties égales des deux côtés de l'entraînement (6) par excentrique sur des excentriques opposés et des manchons d'excentriques opposés, de préférence couplés entre eux.

6. Machine d'usinage selon l'une des revendications 1 à 5, caractérisée en ce que le poids (18) d'équilibrage est pourvu de perçages ou similaires, dans lesquels peuvent être logés de l'extérieure des poids additionnels.

7. Machine d'usinage selon l'une des revendications 1 à 6, caractérisée en ce que les poids additionnels sont logés, lorsqu'on ne les utilise pas, dans des perçages ou similaires d'une poignée ou d'une partie du corps (2).

**Claims**

1. A processing machine for the surface treatment of workpieces by means of a linearly reciprocatable operating rod (12) which is connected to a machining tool and is set in motion by an eccentric drive (6) drivable by means of a drive (5), and in which unbalance of the eccentric drive is compensated by means of an oppositely linearly reciprocatable compensating mass (22) of an eccentric mass compensating means (18), wherein the eccentric (7) of the eccentric drive and the eccentric (19) of the eccentric mass compensating means are of equal magnitude and are non-rotatably arranged on a drive shaft (4), in positions which are displaced through 180°, characterised in that the eccentric (7) of the eccentric drive (6) is provided with an eccentric sleeve (8) and the eccentric (19) of the eccentric mass compensating means (18) is provided with a counter-eccentric sleeve (20), that the eccentric sleeve (8) and the counter-eccentric sleeve (20) are non-rotatably connected together and are displaceable jointly with respect to the eccentrics (7, 19), that rotatably mounted on the counter-eccentric sleeve (20) is a compensating weight (22) which is movably guided in a longitudinal guide (23) parallel to the operating rod (12), and that an adjusting means for varying the eccentric stroke movement comprises a handle (16) non-rotatably connected to the drive shaft (4) and a mounting portion (15) which is non-rotatably connected to the eccentric sleeve (8) and the counter-eccentric sleeve (20), the handle (16) and the mounting portion (15) being non-rotatably connected together by means of a setscrew (17).

2. A processing machine according to claim 1 characterised in that the eccentric sleeve (8) of the eccentric drive (6) and the counter-eccentric sleeve (20) of the eccentric mass compensating means (18) each have a respective projection portion (13, 27) which positively engages axially into a radial slot (14, 28) of the mounting portion (15) and the eccentric sleeve (8) respectively, which are disposed in front thereof.

3. A processing machine according to claim 1 or claim 2 characterised in that the adjusting means comprising the handle (16) and the mounting portion (15) is arranged on the end of the drive shaft (4) which is in opposite relationship to a connecting portion (5) of the drive.

4. A processing machine according to one of claims 1 to 3 characterised in that the longitudinal guide (23) is arranged on a plate (24) parallel to the operating rod (12) between the bearings (3, 3') which support the drive shaft (4).

5. A processing machine according to one of claims 1 to 4 characterised in that the eccentric mass compensating means (18) is divided and is arranged in equal parts thereof on both sides of the eccentric drive (6) on counter-eccentrics and preferably interconnected counter-eccentric sleeves.

6. A processing machine according to one of claims 1 to 5 characterised in that the compensating weight (18) is provided with bores or the like into which additional weights can be inserted from the exterior.

7. A processing machine according to one of claims 1 to 6 characterised in that when not in use the additional weights are stored in bores or the like in a handle or portion of the housing (2).

EP 0 136 716 B1

FIG. 1

FIG. 2

FIG. 3